# FASCICULE DE BREVET EUROPEEN

(11) **EP 2 128 021 B1**
(45) Date de publication et mention de la délivrance du brevet: **19.01.2011**
(21) Numéro de dépôt: 09006525.1
(22) Date de dépôt: 14.05.2009
(51) Int. Cl.: B64C 13/24, F16D 7/06, B64C 27/58

(54) **Dispositif d'accouplement escamotable et vérin de trim associé**
Ueberlastungskupplungsvorrichtung und entsprechender Trimmaktuator
BREAKABLE COUPLING DEVICE AND ASSOCIATED TRIM ACTUATOR

(30) Priorité: 19.05.2008 FR 0802682
(43) Date de publication de la demande: 02.12.2009
(73) Titulaire: EUROCOPTER, 13725 Marignane Cédex (FR)
(72) Inventeur: Gemmati, Bernard, 84360 Lauris (FR); Vincent, Philippe, 83860 Nans les Pins (FR); Biest, Romuald, 13290 Aix en Provence (FR)
(74) Mandataire: GPI & Associés

(56) Documents cités:
- DE-B- 1 101 059
- FR-A- 2 718 102
- GB-A- 1 415 138
- US-A- 2 401 992
- US-A- 2 701 478
- US-A- 5 542 884

## Description

La présente invention concerne un dispositif d'accouplement escamotable, ainsi que le vérin de « trim » associé.

En effet, il est classique de trouver sur un aéronef, et plus particulièrement un hélicoptère, des vérins agencés en parallèle ou en série sur les chaînes de commandes de vol. Ces vérins agencés en parallèle sont usuellement dénommés vérins de trim par l'homme du métier.

Ainsi, un hélicoptère peut comporter un vérin de trim associé à ses commandes de vol longitudinales, un vérin de trim associé à ses commandes de vol latérales, un vérin de trim associé à ses commandes de vol de pas collectif et un vérin de trim associé à ses commandes de vol en lacet.

Chaque vérin de trim remplit alors une première et une deuxième fonctions.

La première fonction améliore le confort du pilote en lui permettant d'ancrer une commande donnée dans une position donnée. Par exemple en bloquant le vérin de trim en pas collectif, le pilote n'a plus besoin de maintenir ce pas collectif avec le levier adéquat et peut donc se consacrer à d'autres tâches.

La deuxième fonction d'un vérin de trim consiste à permettre le réglage de la position neutre d'une commande de vol.

De plus, si l'aéronef est équipé d'un système de pilotage automatique, le vérin de trim peut fournir des indications à ce système de pilotage automatique. Un capteur mesure la position d'un élément mécanique d'un vérin de trim et transmet cette information au système de pilotage automatique qui en déduit la position de la commande de vol associée.

Dans ces conditions, un vérin de trim comporte généralement un moteur entrainant en rotation un arbre de sortie relié à la commande de vol associée par une bielle.

Lorsque le moteur est activé par le pilote, par exemple, l'arbre de sortie du vérin de trim effectue une rotation et déplace la commande de vol.

A contrario, quand le pilote agit sur sa commande de vol, cette dernière entraine la rotation de l'arbre de sortie et par suite la rotation du rotor du moteur du vérin de trim par rapport au stator de ce moteur.

Ce type de vérin répond donc bien aux besoins. Néanmoins, on constate qu'un grippage du moteur équipant le vérin de trim conduit inévitablement à une situation catastrophique en bloquant la commande de vol.

Il est donc impératif de pouvoir rompre la liaison entre le vérin de trim et la commande de vol associée en cas de besoin.

Pour y parvenir, les constructeurs de vérins ont prévu l'implémentation d'une goupille fusible, par exemple entre l'arbre de sortie et la bielle le reliant à une commande de vol.

En cas de blocage du vérin, l'action du pilote sur sa commande de vol génère un cisaillement de la goupille.

Bien que satisfaisante, cette solution nécessite un dimensionnement délicat de la goupille afin que sa valeur de rupture ne soit ni trop faible ni trop élevée.

De plus, la cassure de la goupille ne s'effectue pas nécessairement de manière optimale. Par suite, il est possible que les commandes de vol soient encore entravées par le vérin de trim défectueux.

La solution actuelle n'est donc pas totalement satisfaisante.

Pour y remédier, on pourrait envisager d'implémenter un limiteur de couple adapté dans le vérin de trim, ce limiteur de couple désaccouplant le moteur du vérin de trim et la commande de vol à partir d'un couple déterminé.

En général, les limiteurs de couple comportent un premier et un deuxième plateaux liés par un moyen d'entraînement, des billes par exemple,

Les premier et deuxième plateaux comportent alors chacun un logement discontinu muni d'une pluralité d'orifices répartis de manière équidistante le long d'un cercle.

En dessous d'un couple prédéterminé, chaque bille est coincée en étant insérée d'une part dans un orifice du premier plateau, et, d'autre part dans un orifice du deuxième plateau. Le premier plateau peut entrainer en rotation le deuxième plateau par une liaison par obstacles, et inversement.

Au dessus de ce couple prédéterminé, les billes sortent de leurs orifices ce qui permet de limiter le couple à ladite valeur prédéterminée, puis pénètrent dans l'orifice suivant.

Les billes sortant et rentrant continuellement d'un orifice, on comprend que cette technologie n'est normalement pas transposable à l'intérieur d'un vérin de trim. En effet, le pilote devrait alors lutter en permanence pour manoeuvrer ses commandes de vol en cas de blocage du moteur du vérin.

Par ailleurs, le document US 2 401 992 décrit un dispositif d'accouplement d'un premier et d'un deuxième arbres principaux pourvu d'un moyen de blocage, d'un moyen de compression et d'un moyen d'entraînement.

Le moyen de blocage possède une face intérieure conique pourvue d'un premier logement discontinu et d'un deuxième logement continu.

A partir d'un couple limite, les billes sortent du premier logement, glissent sur la face conique du moyen de blocage et tombent dans le deuxième logement.

Pour réarmer ce dispositif, il suffit alors de réaliser une simple action axiale, le dispositif étant réversible. Cette opération ne garantit alors pas que l'opérateur a inspecté le dispositif par sécurité,

La présente invention a alors pour objet de proposer un dispositif d'accouplement escamotable, ainsi que le vérin de trim associé, permettant de s'affranchir des limitations mentionnées ci-dessus en désaccouplant définitivement et de manière certaine un vérin de trim de la commande de vol associée.

Selon l'invention, un dispositif d'accouplement escamotable d'un premier et d'un deuxième arbres de transmission principaux, fixes en translation le long d'un axe de rotation longitudinal du dispositif, est pourvu, d'un moyen de blocage ainsi que d'un moyen de compression et d'au moins un moyen d'entraînement liant en rotation autour de l'axe de rotation du dispositif le moyen de blocage et le moyen de compression lorsque ces moyens de blocage et de compression exercent un couple sur le moyen d'entraînement autour dudit axe de rotation longitudinal du dispositif en dessous d'un couple prédéterminé. Le moyen de blocage est ainsi muni d'un premier logement discontinu accueillant le moyen d'entraînement, une bille par exemple, en dessous dudit couple prédéterminé.

Par suite, le moyen d'entraînement solidarise en rotation autour de l'axe de rotation du dispositif les moyens de blocage et de compression lorsque ces moyens de blocage et de compression exercent un couple sur le moyen d'entraînement autour dudit axe de rotation longitudinal du dispositif inférieur à un couple prédéterminé.

En effet, le moyen de compression presse alors le moyen d'entraînement dans le premier logement du moyen de blocage, le moyen d'entraînement liant de fait en rotation le moyen de compression au moyen de blocage.

Pour accoupler les premier et deuxième arbres de transmission principaux, Il suffit de fixer le moyen de blocage au premier arbre de transmission principal, et le moyen de compression au deuxième arbre de transmission principal.

De plus, le dispositif selon l'invention est remarquable en ce que, le moyen de blocage comportant un deuxième logement continu décrivant une boucle fermée, le dispositif est muni d'un moyen de déplacement déplaçant de manière irréversible, à savoir sans un démontage du dispositif et donc sans intervention humaine, le moyen d'entraînement du premier logement vers le deuxième logement lorsque le couple exercé sur le moyen d'entraînement est supérieur audit couple prédéterminé.

Le deuxième logement étant continu, le moyen d'entraînement le parcourt sans rencontrer d'obstacles ce qui met fin à la transmission du mouvement rotatif du moyen de compression vers le moyen de blocage, et inversement.

Le désaccouplement est de plus parfait et définitif, sans intervention d'un mécanicien habilité. Le pilote de l'aéronef ne sera donc pas confronté à l'apparition d'efforts résiduels.

En outre, le dispositif selon l'invention possède une ou plusieurs des caractéristiques additionnelles suivantes.

Avantageusement, le premier logement est pourvu d'une succession d'orifices ménagés le long du chemin parcouru par le moyen d'entraînement lors de sa rotation autour dudit axe de rotation en fonctionnement normal, à savoir lorsque le moyen de blocage n'est pas bloqué en rotation et donc libre d'effectuer un mouvement rotatif autour de l'axe de rotation longitudinal du dispositif.

Ce chemin est alors composé d'une succession de trous, aptes à accueillir le moyen d'entraînement, et de bosses, plus précisément des crêtes. En étant maintenu dans un orifice par le moyen de compression, le moyen d'entraînement entraine en rotation le moyen de blocage par une transmission d'efforts par obstacles, ce moyen d'entraînement étant mis en mouvement par le moyen de compression.

A l'inverse, lorsque le moyen de blocage est mis en rotation, par un moteur par exemple, ce moyen de blocage entraine en rotation le moyen d'entraînement qui met à son tour en rotation le moyen de compression.

En cas de blocage du premier arbre de transmission principal, le moyen de blocage n'est plus apte à effectuer un mouvement rotatif. Le moyen d'entrainement sort de son premier logement puis est déplacé par le moyen de déplacement, via le moyen de compression, vers le deuxième logement.

Ce deuxième logement est éventuellement muni d'une gorge continue décrivant l'intégralité du chemin parcouru par le moyen d'entraînement lors de sa rotation autour dudit axe de rotation en fonctionnement anormal, à savoir quand le moyen de blocage n'est plus libre d'effectuer un mouvement rotatif autour de l'axe de rotation longitudinal du dispositif. On note que le deuxième logement ne comporte plus d'obstacle ce qui permet de désaccoupler le moyen de blocage du moyen de compression.

De plus, la gorge continue, de forme annulaire, a une première dimension supérieure à une deuxième dimension du moyen d'entraînement afin que le moyen d'entraînement ne puisse pas saillir de la gorge continue. Le moyen d'entraînement comportant une bille, la profondeur de la gorge est supérieure au diamètre de la bille.

En fonctionnement anormal, c'est-à-dire quand le couple exercé sur le moyen d'entraînement est supérieur audit couple prédéterminé, le moyen d'entraînement tombe alors dans la gorge et n'est plus en contact avec le moyen de compression, ce qui garantit l'absence d'efforts résiduels.

Par suite, il est impossible de réarmer le dispositif d'accouplement sans intervention humaine, via un démontage/remontage du dispositif. Une simple action axiale ne peut en aucun cas permettre le réengagement du moyen d'entraînement dans le premier logement.

Selon un premier mode de réalisation, la gorge continue peut avoir la forme d'un cylindre muni d'une première et d'une deuxième bases reliées par une paroi périphérique interne, la périphérie externe de la gorge en regard dudit moyen de compression étant ouverte pour laisser passer ledit moyen d'entraînement,

De plus, le moyen de compression comporte un carter cylindrique présentant à sa première extrémité une chambre de compression radiale par moyen d'entraînement, la chambre de compression radiale étant ouverte sur le moyen de blocage et le moyen d'entraînement saillant partiellement de la chambre de compression associée.

La chambre de compression sert alors de moyen de guidage du moyen d'entrainement.

Afin d'exercer un effort radial sur le moyen d'entrainement pour le plaquer contre le moyen de blocage, le moyen de compression est pourvu d'au moins un ressort de compression agencé dans la chambre de compression apte à exercer un effort sur un moyen d'entrainement.

Par exemple, un ressort de compression est agencé dans une alvéole interne du carter cylindrique, ce ressort de compression étant solidarisé à une bille du moyen d'entraînement en condition normale à savoir lorsque le couple exercé sur le moyen d'entraînement est Inférieur à un couple prédéterminé, le ressort de compression exerçant une pression sur la bille par exemple via l'intermédiaire d'une lame fixée aux spires du ressort par exemple,

Dans ces conditions, une base du carter cylindrique située à la deuxième extrémité de ce carter cylindrique est solidarisée à un ressort de déplacement du moyen de déplacement, ce ressort de déplacement étant agencé selon une première direction confondue avec ledit axe de rotation et perpendiculaire à une deuxième direction selon laquelle au moins un ressort de compression du moyen de compression est agencé.

En se détendant, le ressort de déplacement induit une translation du moyen de compression le long de l'axe de rotation du dispositif, et de fait du moyen d'entraînement, le moyen d'entrainement se déplaçant du premier logement vers le deuxième logement.

En outre, pour transmettre son mouvement rotatif à un deuxième arbre de transmission principal, le moyen de compression possède un arbre de transmission secondaire du mouvement qui prolonge le deuxième arbre de transmission principal à accoupler.

De plus, le moyen de déplacement comportant un ressort de déplacement, le ressort de déplacement entoure l'arbre de transmission secondaire pour garantir la compacité du dispositif.

Selon un deuxième mode de réalisation, la gorge a la forme d'un cylindre muni d'une première et d'une deuxième bases reliées par une paroi périphérique interne et une paroi périphérique externe, la première base de la gorge en regard dudit moyen de compression étant ouverte pour laisser passer ledit moyen d'entraînement.

De plus, le moyen de compression comporte une plaque présentant sur une première face une chambre de compression radiale par moyen d'entraînement, la chambre de compression radiale étant ouverte sur le moyen de blocage et le moyen d'entraînement saillant partiellement de ladite chambre de compression.

La chambre de compression sert alors de moyen de guidage du moyen d'entraînement en contact avec le moyen de blocage.

Contrairement au premier mode de réalisation, le moyen de déplacement est apte à exercer directement un effort sur le moyen d'entraînement pour le translater. Par ailleurs, une deuxième face de la plaque du moyen de compression est solidarisée à un ressort de compression du moyen de compression, le ressort de compression étant agencé selon une première direction confondue avec l'axe de rotation et perpendiculaire à une deuxième direction selon laquelle au moins un ressort de déplacement du moyen de déplacement est agencé.

Le moyen de compression comportant un ressort de compression, ce ressort de compression entoure un arbre de transmission secondaire du dispositif, l'arbre de transmission secondaire du mouvement prolongeant le deuxième arbre de transmission principal à accoupler.

Indépendamment du mode de réalisation, l'arbre de transmission secondaire comporte avantageusement des cannelures longitudinales secondaires pour être lié en rotation au deuxième arbre de transmission principal.

Les cannelures longitudinales secondaires permettent de lier en rotation l'arbre de transmission secondaire au deuxième arbre de transmission principal et autorise de plus une translation le long dudit axe de rotation de l'arbre de transmission secondaire par rapport au deuxième arbre de transmission principal.

La présente invention a aussi pour objet un vérin de trim d'un aéronef muni d'un premier et d'un deuxième arbres de transmission principaux ainsi que d'un moteur apte à mettre en rotation le premier arbre de transmission principal.

Le vérin de trim est remarquable en ce qu'il est muni d'un dispositif d'accouplement desdits premier et deuxième arbres de transmission principaux selon l'invention, le moyen de blocage étant solidarisé au premier arbre de transmission principal et le moyen de compression étant lié mécaniquement en rotation autour de l'axe de rotation au deuxième arbre de transmission principal.

De plus, le vérin de trim comporte éventuellement une manivelle munie d'un maneton et d'une bielle pour lier le deuxième arbre de transmission principal à une commande de vol, le maneton étant fixé au deuxième arbre de transmission principal et à la bielle.

Le maneton permet à la manivelle de ne pas entrer en contact avec un élément structural bloquant en translation le deuxième arbre de transmission principal.

Par ailleurs, le moyen de compression étant muni d'un arbre de transmission secondaire équipé de cannelures longitudinales secondaires, le deuxième arbre de transmission principal comporte des cannelures longitudinales primaires qui coopèrent avec les cannelures longitudinales secondaires pour lier en rotation l'arbre de transmission secondaire au deuxième arbre de transmission principal tout en autorisant une translation le long dudit axe de rotation de l'arbre de transmission secondaire.

En outre, le vérin de trim comporte avantageusement un moyen d'immobilisation en translation, le long dudit axe de rotation du dispositif d'accouplement, des premier et deuxième arbres de transmission principaux. Par exemple, ce moyen d'immobilisation consiste en des paliers autorisant uniquement un mouvement rotatif.

L'invention et ses avantages apparaîtront avec plus de détails dans le cadre de la description qui suit avec des exemples de réalisation donnés à titre illustratif en référence aux figures annexées qui représentent ;
- la figure 1, une coupe schématique d'un vérin de trim en positon accouplée muni d'un dispositif de désaccouplement selon un premier mode de réalisation,
- la figure 2, une vue isométrique d'un moyen de blocage selon l'invention selon un premier mode de réalisation d'un dispositif de désaccouplement,
- la figure 3, une coupe d'un moyen de compression selon l'invention selon un premier mode de réalisation d'un dispositif de désaccouplement,
- la figure 4, une coupe schématique d'un vérin de trim, muni d'un dispositif de désaccouplement selon un premier mode de réalisation, lorsqu'un blocage se produit,
- la figure 5, une coupe schématique d'un vérin de trim, muni d'un dispositif de désaccouplement selon un premier mode de réalisation, en positon désaccouplée et,
- la figure 6, une coupe schématique d'un vérin de trim en positon accouplée muni d'un dispositif de désaccouplement selon un deuxième mode de réalisation.

Les éléments présents dans plusieurs figures distinctes sont affectés d'une seule et même référence.

On note que trois directions X, Y et Z orthogonales les unes par rapport aux autres sont représentées sur les figures.

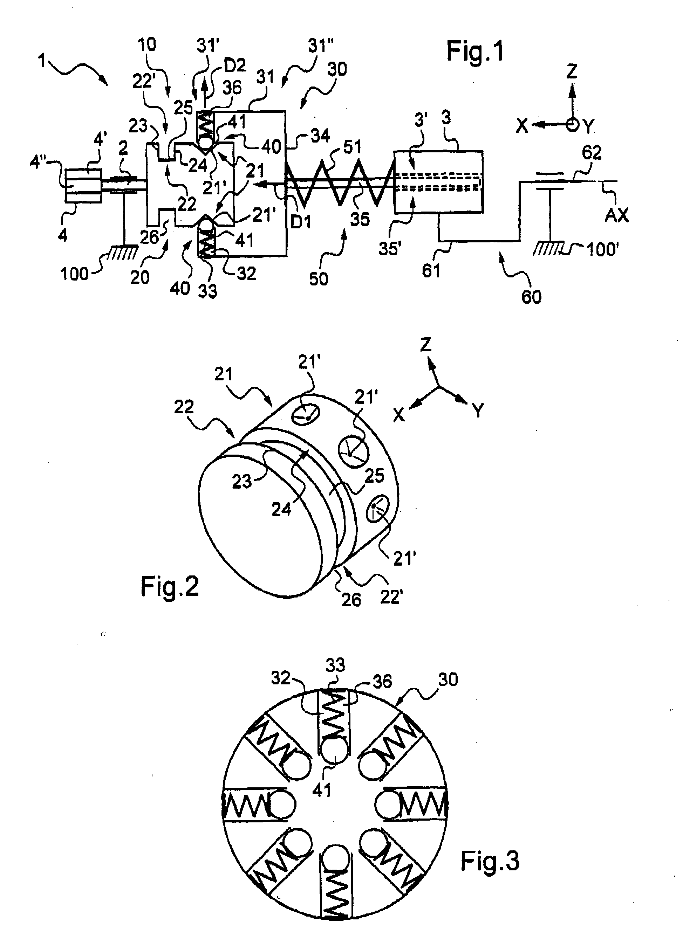

La figure 1 présente une coupe schématique d'un vérin de trim 1 en positon accouplée.

Ce vérin de trim 1 comporte successivement, de gauche à droite sur la figure 1, un moteur 4 muni d'un stator 4' et d'un rotor 4", un premier arbre de transmission principal 2, un dispositif d'accouplement 10, un deuxième arbre de transmission principal 3 puis une manivelle 60 pour le lier à une commande de vol d'un aéronef, la commande de pas de collectif des pales d'un giravion par exemple.

On note qu'il est évidemment concevable de lier la manivelle 60 du deuxième arbre de sortie principal 3 au moteur du vérin, et son premier arbre de sortie principal 2 à la commande de vol.

De plus, le vérin de trim 1 est muni d'une enveloppe extérieure non représentée qui englobe ces éléments constitutifs.

Par ailleurs, afin de lier en rotation le premier arbre de transmission principal 2 au deuxième arbre de transmission principal 3 tout en autorisant un désaccouplement irréversible sans intervention humaine à partir d'un certain seuil, le dispositif d'accouplement 10 comporte un moyen de blocage 20, un moyen de compression 30, au moins un moyen d'entraînement 40 et un moyen de déplacement 50 du moyen d'entraînement 40.

Le moyen de blocage 20 est solidarisé au premier arbre de transmission principal 2. Ce premier arbre étant soutenu par un palier 100 de type usuel, représentant un moyen d'immobilisation en translation du vérin de trim et autorisant uniquement un mouvement rotatif autour de l'axe de rotation longitudinal AX du dispositif d'accouplement 10, l'ensemble premier arbre de transmission 21 moyen de blocage 20 est fixe en translation le long de l'axe de rotation AX mais libre d'effectuer un mouvement rotatif autour de cet axe de rotation AX.

De même, le moyen de compression 30 comporte un arbre de transmission secondaire 35 qui coopère avec le deuxième arbre de transmission principal 3 afin que l'arbre de transmission secondaire 35 soit solidaire en rotation autour de l'axe de rotation AX du deuxième arbre de transmission principal 3.

Par suite, l'arbre de transmission secondaire 35 est équipé par exemple de cannelures longitudinales secondaires 35' externes qui traversent l'intérieur du deuxième arbre de transmission principal 3 pour coopérer avec des cannelures longitudinales primaires 3' internes du deuxième arbre de transmission principal 3.

Compte tenu de cet agencement, on note que l'arbre de transmission secondaire 35, et donc le moyen de compression 30 est à même de se déplacer en translation le long de l'axe de rotation longitudinal AX de symétrie du dispositif d'accouplement 10.

A contrario, le deuxième axe de transmission principal 3 est fixe en translation.

En effet, afin d'être lié à une commande de vol, le deuxième axe de transmission principal 3 est prolongé par une manivelle 60. Cette manivelle possède un maneton 61 solidaire du deuxième axe de transmission principal 3, pour éviter une interférence avec l'arbre de transmission secondaire 35, puis une bielle 62 destinée à être liée mécaniquement à une commande de vol.

La bielle 62 traverse alors un palier 100', d'un moyen d'immobilisation du vérin de trim, lui autorisant un mouvement rotatif autour de l'axe de rotation AX tout en la bloquant en translation le long de cet axe de rotation AX.

Afin d'accoupler les premier et deuxième arbres de transmission principaux 2, 3 en dessous d'un certain seuil, le dispositif d'accouplement comporte au moins un moyen d'entrainement 40 pour lier en rotation le moyen de compression 30 au moyen de blocage 20, Ces moyens de blocage 20 et de compression 30 étant respectivement solidaires en rotation des premier et deuxième arbres de transmission principaux, le moyen d'entraînement 40 remplit effectivement l'objectif fixé.

Plus précisément, indépendamment du mode de réalisation, le moyen de blocage 20 comporte un premier logement discontinu 21' pourvu d'une succession d'orifices le long du chemin parcouru par le moyen d'entraînement en fonctionnement normal, à savoir lorsque le dispositif d'accouplement 10 est en position accouplée.

De plus, le moyen de blocage 20 comprend un deuxième logement continu 22 muni d'une gorge 22' annulaire décrivant le chemin parcouru par le moyen d'entraînement 40 lors de sa rotation autour du moyen de blocage 20 lors d'un fonctionnement anormal, à savoir lorsque le dispositif de d'accouplement 10 est en position désaccouplée.

Ainsi, en position accouplée, le moyen de compression 30 comprime les moyens d'entraînement dans le premier logements. Par exemple, le dispositif d'accouplement comportant une pluralité de moyens d'entraînement, chaque moyen d'entraînement comprenant une bille 41, le moyen de compression 30 pousse chaque bille 41 dans un orifice 21' du premier logement.

Si le couple exercé sur le moyen d'entraînement 40 par le moyen de blocage 20 et le moyen de compression est inférieur à couple prédéterminé, les billes 41 constituant les moyens d'entraînement 40 restent dans leurs orifices 21.

Par conséquent, une rotation du premier arbre de transmission principal 2, et donc du moyen de blocage 20 lui étant solidaire, génère une rotation des moyens d'entraînement 40 par obstacles. Les moyens d'entrainement 40 entrainent à leur tour en rotation le moyen de compression 30 autour de l'axe de rotation AX, et de fait le deuxième arbre de transmission principal 3.

A l'inverse, une rotation du deuxième arbre de transmission principal 3, et donc du moyen de compression 30 lui étant solidaire en rotation autour de l'axe de rotation AX, génère une rotation des moyens d'entraînement 40. Les moyens d'entraînement 40 entraînent à leur tour en rotation le moyen de blocage 20, et de fait le premier arbre de transmission principal 2.

Cependant, au-delà de ce couple prédéterminé, les billes 41 des moyens d'entrainement 40 sortent des orifices 21 du premier logement discontinu 21 et sont déplacées via le moyen de déplacement 50 vers le deuxième logement 22 du moyen de blocage.

Ce deuxième logement 22 étant continu, il ne présente pas d'obstacle ce qui permet de désaccoupler en rotation autour de l'axe de rotation AX le moyen de blocage 20 du moyen de compression 30, et donc le premier arbre de transmission principal 2 du deuxième arbre de transmission principal 3. Ce désaccouplement est irréversible dans la mesure où l'intervention d'un technicien est nécessaire pour remettre le dispositif d'accouplement en position accouplée.

De plus, indépendamment du mode de réalisation choisi, la gorge continue 22' a une première dimension L1 supérieure à une deuxième dimension L2 du moyen d'entraînement 40 afin que ce moyen d'entraînement 40 ne puisse pas en aucun cas saillir et sortir de la gorge continue 22' une fois engagé.

Les figures 1 à 5 présentent plus spécifiquement un premier mode de réalisation de l'invention.

Selon ce premier mode de réalisation, en référence aux figures 1 et 2, les premier et deuxième logements 21, 22 sont successivement agencés le long de l'axe de rotation AX.

De plus, la gorge 22' du deuxième logement 22 a la forme d'un cylindre muni d'une première et d'une deuxième bases 23, 24 reliées par une paroi périphérique interne 25 constituant le fond de la gorge. Pour permettre aux billes des moyens d'entraînement 40 d'entrer dans la gorge 22', la périphérie externe 26 de cette gorge 22' en regard du moyen de compression en position désaccouplée est ouverte.

La figure 2 montre clairement les premier et deuxième logements 21, 22. Plus particulièrement, on notera la discontinuité et la continuité respectivement de ces premier et deuxième logements 21, 22.

En référence aux figures 1 et 3, le moyen de compression 30 est apte à être solidaire en rotation de chaque moyen d'entraînement 40.

En effet, le moyen de compression 30 comprend un carter cylindrique 31 présentant des alvéoles 36 qui définissent chacune une chambre de compression radiale 32 qui débouche uniquement sur le moyen de blocage 20.

Le dispositif d'accouplement 10 comportant une pluralité de moyens d'entraînement distincts, à savoir une pluralité de billes, chaque élément d'entraînement 40 est agencé dans une chambre de compression radiale 32 agencée à la première extrémité 31' ouverte du carter cylindrique 31.

Plus précisément, chaque moyen d'entraînement 40 est agencé à l'intérieur d'une chambre de compression radiale 32 de manière à être en contact avec un ressort de compression 33 du moyen de compression 30, via une lame fixée à ce ressort de compression par exemple, chaque moyen d'entraînement 40 saillant au moins partiellement de la chambre de compression associée.

En effet, chaque moyen d'entrainement saille partiellement de la chambre de compression associée en condition normale et saille totalement de cette chambre de compression lorsqu'il tombe dans la gorge continue 22'.

La base du carter cylindrique 31 disposée à la deuxième extrémité 31" de ce carter cylindrique 31 est alors solidarisée au moyen de déplacement 50, à savoir à un ressort de déplacement 51 reliant cette base au deuxième arbre de transmission principal 3.

Ce ressort de déplacement 51 est ainsi disposé selon une première direction D1 confondue avec l'axe de rotation AX, alors que, au contraire, les ressorts de compression 33 du moyen de compression 30 sont tous disposés selon une deuxième direction D2 radiale perpendiculaire à ladite première direction.

En outre, on note que le ressort de déplacement 51 entoure alors partiellement l'arbre de transmission secondaire 35 du moyen de compression 30.

En référence à la figure 1, en position accouplée, les différents moyens d'entrainement sont maintenus chacun dans un orifice 21' du premier logement 21 du moyen de blocage.

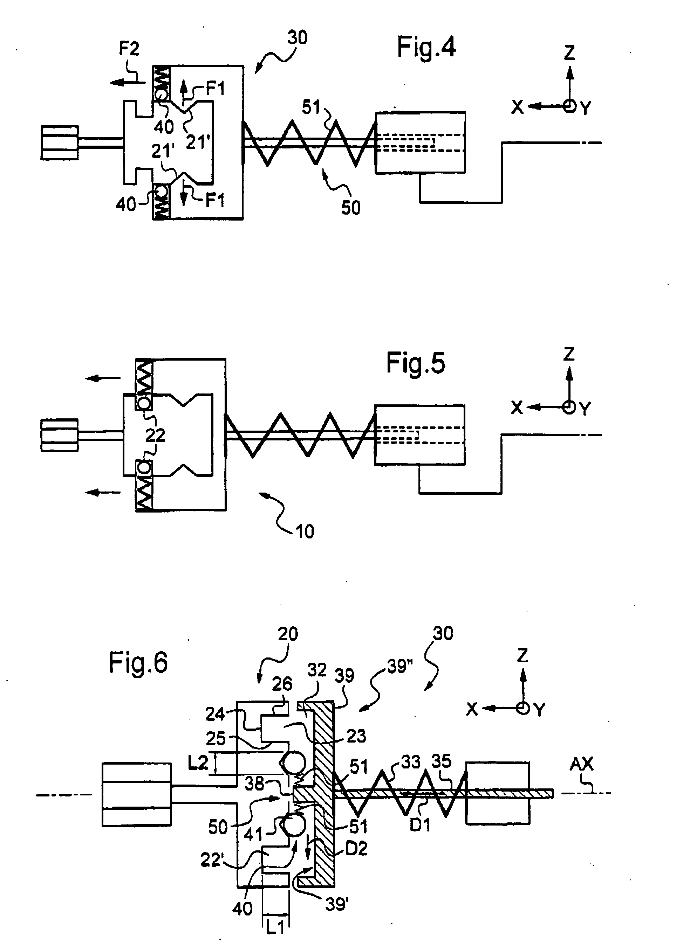

En référence à la figure 4, au-delà d'un couple prédéterminé exercé sur les moyens d'entraînement 40, ces moyens d'entraînement 40 sortent de leur orifice 21' suivant les flèches F1.

Les moyens d'entraînement 40 n'étant plus bloqués dans le premier logement 21, le ressort de déplacement 51 du moyen de déplacement 50 peut se détendre. Le deuxième arbre de transmission principal étant fixe en translation en raison de la présence d'un moyen d'immobilisation 100' en translation, le ressort de compression 51 pousse le moyen de compression 30 qui translate selon la flèche F2.

Chaque moyen d'entraînement 40 étant lié au moyen de compression 30 et partiellement emprisonné par la chambre de compression radiale 32 associée, les moyens d'entraînement 40 se déplacent conjointement avec le moyen de compression 30.

En référence à la figure 5, les moyens d'entraînement 40 atteignent alors le deuxième logement 22. Chaque ressort de compression 33 pousse ensuite le moyen d'entraînement 40 associé dans la gorge continue de ce deuxième logement 22.

Le deuxième logement 22 étant continu, les moyens d'entraînement 40 ne rencontrent plus d'obstacles aptes à les pousser ou à être pousser par les moyens d'entraînement. Par suite, le dispositif d'accouplement 10 se trouve en position désaccouplée.

On remarque que, quelle que soit la position, l'arbre secondaire est toujours partiellement agencé à l'intérieur du deuxième arbre de transmission principal 3 de manière à maintenir en place le moyen de compression 30.

La figure 6 présente un deuxième mode de réalisation.

Contrairement au premier mode de réalisation, les premier et deuxième logements du moyen de blocage ne se trouvent plus l'un après l'autre par rapport à l'axe de rotation AX, mais l'un au dessus de l'autre.

La gorge 22' du deuxième logement 22 ayant la forme d'un cylindre annulaire muni d'une première et d'une deuxième bases 23, 24 ainsi que d'une paroi périphérique interne 25 et d'une paroi périphérique externe 26, la première base 23 en regard du moyen de compression 30 est ouverte pour permettre aux moyens d'entraînement 40 de pénétrer dans cette gorge 22'. La deuxième base 24 constitue alors le fond de la gorge 22.

De plus, ce n'est plus le ressort de compression du moyen de compression 30 qui est en contact avec les moyens d'entraînement mais le moyen de déplacement 50.

En effet, selon le deuxième mode de réalisation, le moyen de compression 30 comporte une plaque 39. Cette plaque 39 est munie sur sa première face 39', en retard du moyen de blocage, d'une pluralité de chambres de compression radiales débouchant uniquement sur le moyen de blocage 20.

Chaque moyen d'entraînement 40 est alors disposé à l'intérieur d'une chambre de compression radiale 32 tout en étant en contact avec un ressort de déplacement 51 du moyen de déplacement 50, chaque moyen d'entraînement 40 saillant au moins partiellement de la chambre de compression associée. Ainsi, chaque moyen d'entraînement 40 est fixé à un épaulement 38 du moyen de blocage 20 constituant le fond des chambres de compression radiale 32 par un ressort de déplacement 51

La deuxième face 39" de la plaque 39 du moyen de compression 30 est alors solidarisée à un ressort de compression 33 reliant cette deuxième face 39" au deuxième arbre de transmission principal 3.

Ce ressort de compression 33 est ainsi disposé selon une première direction D1 confondue avec l'axe de rotation AX, alors qu'au contraire les ressorts de déplacement 51 du moyen de déplacement sont tous disposés selon une deuxième direction D2 radiale perpendiculaire à ladite première direction,

En outre, on note que le ressort de compression 33 entoure alors partiellement l'arbre de transmission secondaire 35 du moyen de compression 30.

Comme pour le premier mode de réalisation, au dessus d'un couple prédéterminé, les moyens d'entraînement sortent de leurs orifices du premier logement et sont poussés vers le deuxième logement du moyen de blocage.

Naturellement, la présente invention est sujette à de nombreuses variations quant à sa mise en oeuvre. Bien que plusieurs modes de réalisation aient été décrits, on comprend bien qu'll n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif d'accouplement (10) escamotable d'un premier et d'un deuxième arbres de transmission principaux (2, 3) fixes en translation le long d'un axe de rotation (AX) longitudinal du dispositif, ce dispositif étant pourvu d'un moyen de blocage (20) ainsi que d'un moyen de compression (30) et d'au moins un moyen d'entraînement (40) liant en rotation autour dudit axe de rotation (AX) longitudinal ledit moyen de blocage (20) et ledit moyen de compression (30) en dessous d'un couple prédéterminé, ledit moyen de blocage (20) étant pourvu d'un premier logement discontinu (21) accueillant ledit moyen d'entrainement (40) en dessous dudit couple,
ledit moyen de blocage (20) comportant un deuxième logement continu (22) décrivant une boucle fermée, **caractérisé en ce que** ledit dispositif d'accouplement (10) est muni d'un moyen de déplacement (50) déplaçant de manière irréversible sans démontage dudit dispositif, ledit moyen d'entraînement (40) dudit premier logement (21) vers ledit deuxième logement (22) lorsque le couple exercé sur le moyen d'entraînement est supérieur audit couple prédéterminé, ledit moyen de déplacement (50) comportant un ressort de déplacement (51) apte à translater le moyen d'entrainement (40) dudit premier logement (21) vers ledit deuxième logement (22).

2. Dispositif selon la revendication 1,
**caractérisé en ce que** ledit premier logement (21) est pourvu d'une succession d'orifices (21') ménagés le long du chemin parcouru par ledit moyen d'entraînement (40) lors de sa rotation autour dudit axe de rotation (AX) en fonctionnement normal.

3. Dispositif selon l'une quelconque des revendications précédentes,
**caractérisé en ce que** ledit moyen de compression (30) est apte à exercer un effort sur ledit moyen d'entraînement (40).

4. Dispositif selon l'une quelconque des revendications précédentes,
**caractérisé en ce que** ledit deuxième logement (22) est muni d'une gorge continue (22') décrivant le chemin parcouru par ledit moyen d'entraînement (40) lors de sa rotation autour dudit axe de rotation (AX) en fonctionnement anormal, ladite gorge continue (22') ayant une première dimension (L1) supérieure à une deuxième dimension (L2) dudit moyen d'entraînement (40) afin que ledit moyen d'entraînement (40) ne puisse pas saillir de ladite gorge continue (22').

5. Dispositif selon la revendication 4,
**caractérisé en ce que** ladite gorge (22') a la forme d'un cylindre muni d'une première et d'une deuxième bases (23, 24) reliées par une paroi périphérique interne (25), une périphérie externe (26) de la gorge (22') en regard dudit moyen de compression (30) étant ouverte pour laisser passer ledit moyen d'entraînement (40).

6. Dispositif selon l'une quelconque des revendications précédentes,
**caractérisé en ce que** ledit moyen de compression (30) comporte un carter cylindrique (31) présentant à sa première extrémité (31') une chambre de compression radiale (32) par moyen d'entraînement (40), ladite chambre de compression radiale (32) étant ouverte sur ledit moyen de blocage et ledit moyen d'entraînement (40) saillant partiellement de ladite chambre de compression (32).

7. Dispositif selon la revendication 6,
**caractérisé en ce que** ledit moyen de compression (30) est pourvu d'au moins un ressort de compression (33) agencé dans ladite chambre de compression (32).

8. Dispositif selon l'une quelconque des revendications 6 à 7,
**caractérisé en ce qu'**une base (34) dudit carter cylindrique (31) située à la deuxième extrémité (31") de ce carter cylindrique (31) est solidarisée à un ressort de déplacement (51) dudit moyen de déplacement (50), ledit ressort de déplacement (51) étant agencé selon une première direction (D1) confondue avec ledit axe de rotation (AX) et perpendiculaire à une deuxième direction (D2) selon laquelle au moins un ressort de compression (33) dudit moyen de compression (30) est agencé.

9. Dispositif selon l'une quelconque des revendications 6 à 8,
**caractérisé en ce que** ledit moyen de déplacement (50) comportant un ressort de déplacement (51), ledit ressort de déplacement (51) entoure un arbre de transmission secondaire (35) dudit dispositif, ledit arbre de transmission secondaire (35) du mouvement prolongeant ledit deuxième arbre de transmission principal (3) à accoupler.

10. Dispositif selon la revendication 4,
**caractérisé en ce que** ladite gorge (22') a la forme d'un cylindre muni d'une première et d'une deuxième bases (23, 24) reliées par une paroi périphérique interne (25) et une paroi périphérique externe (26), une première base (23) de la gorge (22') en regard dudit moyen de compression (30) étant ouverte pour laisser passer ledit moyen d'entraînement (40).

11. Dispositif selon la revendication 10,
**caractérisé en ce que** ledit moyen de déplacement (50) est apte à exercer un effort sur ledit moyen d'entrainement (40).

12. Dispositif selon l'une quelconque des revendications 10 à 11,
**caractérisé en ce que** ledit moyen de compression (30) comporte un plaque (39) présentant sur une première face (39') une chambre de compression radiale (32) par moyen d'entraînement (40), ladite chambre de compression radiale (32) étant ouverte sur ledit moyen de blocage (20) et ledit moyen d'entraînement (40) saillant partiellement de ladite chambre de compression (32).

13. Dispositif selon la revendication 12,
**caractérisé en ce qu'**une deuxième face (39") de ladite plaque (39) est solidarisée à un ressort de compression (33) dudit moyen de compression (30), ledit ressort de compression (33) étant agencé selon une première direction (D1) confondue avec ledit axe de rotation (AX) et perpendiculaire à une deuxième direction (D2) selon laquelle au moins un ressort de déplacement (51) dudit moyen de déplacement (50) est agencé.

14. Dispositif selon l'une quelconque des revendications 10 à 13,
**caractérisé en ce que** ledit moyen de compression (30) comportant un ressort de compression (31), ledit ressort de compression (31) entoure un arbre de transmission secondaire (35) dudit dispositif, ledit arbre de transmission secondaire (35) du mouvement prolongeant ledit deuxième arbre de transmission principal (3) à accoupler.

15. Dispositif selon l'une quelconque des revendications précédentes,
**caractérisé en ce que**, ledit dispositif (10) comportant un arbre de transmission secondaire, ledit arbre de transmission secondaire (35) comporte des cannelures longitudinales secondaire pour être lié en rotation audit deuxième arbre de transmission principal (3).

16. Vérin de trim (1) d'un aéronef muni d'un premier et d'un deuxième arbres de transmission principaux (2, 3) ainsi que d'un moteur (4) apte à mettre en rotation un desdits premier et deuxième arbres de transmission principaux (2, 3),
**caractérisé en ce qu'**il est muni d'un dispositif d'accouplement (10) desdits premier et deuxième arbres de transmission principaux (2, 3) selon l'une quelconque des revendications précédentes, ledit moyen de blocage (20) étant solidarisé audit premier arbre de transmission principal (2) et ledit moyen de compression (30) étant lié mécaniquement en rotation autour dudit axe de rotation (AX) audit deuxième arbre de transmission principal (3).

17. Vérin de trim selon la revendication 16,
**caractérisé en ce qu'**il comporte une manivelle (60) munie d'un maneton (61) et d'une bielle (62) pour lier ledit deuxième arbre de transmission principal (3) à une commande de vol, ledit maneton (61) étant fixé audit deuxième arbre de transmission principal (3) et à ladite bielle (62).

18. Vérin de trim selon l'une quelconque des revendications 16 à 17,
**caractérisé en ce que**, ledit moyen de compression (30) étant muni d'un arbre de transmission secondaire (35) équipé de cannelures longitudinales secondaires, ledit deuxième arbre de transmission principal (3) comporte des cannelures longitudinales primaires qui coopèrent avec lesdites cannelures longitudinales secondaires.

19. Vérin de trim selon l'une quelconque des revendications 16 à 18,
**caractérisé en ce qu'**il comporte un moyen d'immobilisation (100, 100') en translation, le long dudit axe de rotation (AX) dudit dispositif d'accouplement (10), des premier et deuxième arbres de transmission principaux (2,3).

## Claims

1. Breakable coupling device (10) for coupling a first and a second main transmission shaft (2, 3) that are stationary in translation along a longitudinal axis of rotation (AX) of the device, this device being provided with a blocking means (20) together with a compression means (30) and at least one drive means (40) connecting said blocking means (20) and said compression means (30) together in rotation about said longitudinal axis of rotation (AX) below a predetermined torque, said blocking means (20) being provided with a first, discontinuous housing (21) that receives said drive means (40) below said torque,
said blocking means (20) including a second, continuous housing (22) that describes a closed loop, **characterised in that** said coupling device (10) is provided with a shift means (50) which shifts said drive means (40) from said first housing (21) towards said second housing (22) when the torque exerted on the drive means is greater than said predetermined torque, and does so in a manner that is not reversible without said device being disassembled, said shift means (50) including a shift spring (51) suitable for moving the drive means (40) from said first housing (21) towards said second housing (22).

2. Device according to Claim 1,
**characterised in that** said first housing (21) is provided with a succession of orifices (21') formed along the path travelled by said drive means (40) during its rotation about said axis of rotation (AX) in normal operation.

3. Device according to any one of the preceding claims,
**characterised in that** said compression means (30) is suitable for exerting a force on said drive means (40).

4. Device according to any one of the preceding claims,
**characterised in that** said second housing (22) is provided with a continuous groove (22') describing the path travelled by said drive means (40) during its rotation about said axis of rotation (AX) in abnormal operation, said continuous groove (22') having a first dimension (L1) greater than a second dimension (L2) of said drive means (40) so that said drive means (40) cannot project from said continuous groove (22').

5. Device according to Claim 4,
**characterised in that** said groove (22') is in the form of a cylinder provided with a first and a second base (23, 24) connected together by an internal peripheral wall (25), an external periphery (26) of the groove (22') facing said compression means (30) being open so as to allow said drive means (40) to pass therethrough.

6. Device according to any one of the preceding claims,
**characterised in that** said compression means (30) includes a cylindrical casing (31) presenting at its first end (31') one radial compression chamber (32) per drive means (40), said radial compression chamber (32) being open to said blocking means, and said drive means (40) projecting in part from said compression chamber (32).

7. Device according to Claim 6,
**characterised in that** said compression means (30) is provided with at least one compression spring (33) arranged in said compression chamber (32).

8. Device according to any one of Claims 6 to 7,
**characterised in that** a base (34) of said cylindrical casing (31) situated at the second end (31") of this cylindrical casing (31) is secured to a shift spring (51) of said shift means (50), said shift spring (51) being arranged in a first direction (D1) that coincides with said axis of rotation (AX) and that is perpendicular to a second direction (D2) along which at least one compression spring (33) of said compression means (30) is arranged.

9. Device according to any one of Claims 6 to 8,
**characterised in that** said shift means (50) includes a shift spring (51), said shift spring (51) surrounding a secondary transmission shaft (35) of said device, said secondary motion transmission shaft (35) extending said second main transmission shaft (3) to be coupled.

10. Device according to Claim 4,
**characterised in that** said groove (22') is in the form of a cylinder provided with a first and a second base (23, 24) connected together by an internal peripheral wall (25) and an external peripheral wall (26), a first base (23) of the groove (22') facing said compression means (30) being open so as to allow said drive means (40) to pass therethrough.

11. Device according to Claim 10,
**characterised in that** said shift means (50) is suitable for exerting a force on said drive means (40).

12. Device according to any one of Claims 10 to 11,
**characterised in that** said compression means (30) includes a plate (39) having a first face (39') presenting one radial compression chamber (32) per drive means (40), said radial compression chamber (32) being open to said blocking means (20) and said drive means (40) projecting in part from said compression chamber (32).

13. Device according to Claim 12,
**characterised in that** a second face (39") of said plate (39) is secured to a compression spring (33) of said compression means (30), said compression spring (33) being arranged in a first direction (D1) that coincides with said axis of rotation (AX) and that is perpendicular to a second direction (D2) along which at least one shift spring (51) of said shift means (50) is arranged.

14. Device according to any one of Claims 10 to 13,
**characterised in that** said compression means (30) comprise a compression spring (31), said compression spring (31) surrounding a secondary transmission shaft (35) of said device, said secondary motion transmission shaft (35) extending said second main transmission shaft (3) to be coupled.

15. Device according to any one of the preceding claims,
**characterised in that** said device (10) includes a secondary transmission shaft, said secondary transmission shaft (35) having secondary longitudinal fluting so as to be connected in rotation to said second main transmission shaft (3).

16. Aircraft trim actuator (1) provided with a first and a second main transmission shaft (2, 3) and with a motor (4) suitable for setting one of said first and second main transmission shafts (2, 3) into rotation,
**characterised in that** it is provided with a coupling device (10) for coupling said first and second main transmission shafts (2, 3) according to any one of the preceding claims, said blocking means (20) being secured to said first main transmission shaft (2) and said compression means (30) being mechanically connected in rotation about said axis of rotation (AX) to said second main transmission shaft (3).

17. Trim actuator according to Claim 16,
**characterised in that** it includes a crank (60) provided with a crank pin (61) and a connecting rod (62) for connecting said second main transmission shaft (3) to a flight control, said crank pin (61) being fastened to said second main transmission shaft (3) and to said connecting rod (62).

18. Trim actuator according to any one of Claims 16 to 17,
**characterised in that** said compression means (30) are provided with a secondary transmission shaft (35) equipped with secondary longitudinal fluting, said second main transmission shaft (3) having primary longitudinal fluting that co-operates with said secondary longitudinal fluting.

19. Trim actuator according to any one of Claims 16 to 18,
**characterised in that** it includes a means (100, 100') for preventing the first and second main transmission shafts (2, 3) from moving in translation along said axis of rotation (AX) of said coupling device (10).

## Patentansprüche

1. Ausrückbare Kupplungsvorrichtung (10) einer ersten und einer zweiten Haupttransmissionswelle (2, 3), die in Translationsrichtung längs einer longitudinalen Rotationsachse (AX) der Vorrichtung befestigt sind, wobei die Vorrichtung ein Blockiermittel (20) sowie ein Kompressionsmittel (30) und mindestens ein Antriebsmittel (40) aufweist, welches das Blockiermittel (20) und das Kompressionsmittel (30) unterhalb eines vorbestimmten Drehmoments in Drehrichtung um die longitudinale Drehachse (AX) verbindet, wobei das Blockiermittel (20) mit einem ersten unterbrochenen Lager (21) versehen ist, welches das Antriebsmittel (40) unterhalb des besagten Drehmoments aufnimmt, wobei das Blockiermittel (20) ein zweites kontinuierliches Lager (22) aufweist, welches einen geschlossenen Kreis beschreibt,
**dadurch gekennzeichnet, dass** die Kupplungsvorrichtung (10) ein Verschiebemittel (50) aufweist, welches das Antriebsmittel (40) des ersten Lagers (21) ohne Demontage der Vorrichtung irreversibel zum zweiten Lager (22) verschiebt, wenn das auf das Antriebsmittel ausgeübte Drehmoment größer ist als das vorbestimmte Drehmoment, wobei das Verschiebemittel (50) eine Verschiebefeder (51) aufweist, mit der das Antriebsmittel (40) aus dem ersten Lager (21) zum zweiten Lager (22) verschoben werden kann.

2. Vorrichtung nach Anspruch 1,
**dadurch gekennzeichnet, dass** das erste Lager (21) mit einer Folge von Öffnungen (21') versehen ist, die entlang dem Pfad der von dem Antriebsmittel (40) während seiner Drehung um die Drehachse (AX) im normalen Betrieb durchlaufen wird, angeordnet sind.

3. Vorrichtung nach einem der vorstehenden Ansprüche,
**dadurch gekennzeichnet, dass** das Kompressionsmittel (30) eine Kraft auf das Antriebsmittel (40) ausüben kann.

4. Vorrichtung nach einem der vorstehenden Ansprüche,
**dadurch gekennzeichnet, dass** das zweite Lager (22) mit einer kontinuierlichen Nut (22') versehen ist, die den Pfad, den das Antriebsmittel (40) während seiner Rotation um die Rotationsachse (AX) im anormalen Betrieb durchläuft, beschreibt, wobei die kontinuierliche Nut (22') eine erste Abmessung (L1) aufweist, die größer ist als eine zweite Abmessung (L2) des Antriebsmittels (40), damit das Antriebsmittel (40) nicht aus der kontinuierlichen Nut (22') heraustreten kann.

5. Vorrichtung nach Anspruch 4,
**dadurch gekennzeichnet, dass** die Nut (22') die Form eines Zylinders mit einer ersten und einer zweiten Grundfläche (23, 24) aufweist, die durch eine innere periphere Wandung (25) miteinander verbunden sind, wobei die Nut (22') an ihrem äußeren Rand gegenüber dem Kompressionsmittel (30) offen ist, um das Antriebsmittel (40) passieren zu lassen.

6. Vorrichtung nach einem der vorstehenden Ansprüche,
**dadurch gekennzeichnet, dass** das Kompressionsmittel (30) ein zylinderförmiges Gehäuse (31) aufweist, welches an seinem ersten Ende (31') eine Kammer (32) für eine radiale Kompression durch das Antriebsmittel (40) aufweist, wobei die radiale Kompressionskammer (32) gegenüber dem Blockiermittel und dem Antriebsmittel (40) offen ist, die teilweise aus der Kompressionskammer (32) vorstehen.

7. Vorrichtung nach Anspruch 6,
**dadurch gekennzeichnet, dass** das Kompressionsmittel (30) mit mindestens einer Kompressionsfeder (33) versehen ist, die in der Kompressionskammer (32) angeordnet ist.

8. Vorrichtung nach einem der Ansprüche 6 oder 7,
**dadurch gekennzeichnet, dass** eine Grundfläche (34) des Zylindergehäuses (31), die am zweiten Ende (31") des Zylindergehäuses (31) liegt, mit einer Verschiebungsfeder (51) für das Verschiebungsmittel (50) fest verbunden ist, wobei die Verschiebungsfeder (51) in einer ersten Richtung (D1) angeordnet ist, die der Rotationsachse (AX) entspricht und die senkrecht zu einer zweiten Richtung (D2) verläuft, in der mindestens eine Kompressionsfeder (33) des Kompressionsmittels (30) angeordnet ist.

9. Vorrichtung nach einem der Ansprüche 6 bis 8,
**dadurch gekennzeichnet, dass** das Verschiebemittel (50) eine Verschiebefeder (51) aufweist, wobei die Verschiebefeder (51) eine sekundäre Transmissionswelle (35) der Vorrichtung umgibt, wobei die sekundäre Welle (35) zur Transmission einer Bewegung die zweite Haupttransmissionswelle (3), die anzukuppeln ist, verlängert.

10. Vorrichtung nach Anspruch 4, **dadurch gekennzeichnet, dass** die Nut (22') die Form eines Zylinders hat, der mit einer ersten und einer zweiten Grundfläche (23, 24) versehen ist, die durch eine innere Randwandung (25) verbunden sind, wobei eine äußere Randwandung (26) und eine erste Grundfläche (23) der Nut (22'), die dem Kompressionsmittel (30) gegenüberliegt, offen sind, um das Antriebsmittel (40) passieren zu lassen.

11. Vorrichtung nach Anspruch 10,
**dadurch gekennzeichnet, dass** das Verschiebemittel (50) eine Kraft auf das Antriebsmittel (40) ausüben kann.

12. Vorrichtung nach einem der Ansprüche 10 oder 11,
**dadurch gekennzeichnet, dass** das Kompressionsmittel (30) eine Platte (39) aufweist, die auf einer ersten Seite (39') eine radiale Kompressionskammer (32) für das Antriebsmittel (40) aufweist, wobei die radiale Kompressionskammer (32) in Richtung auf das Blockiermittel (20) und das Antriebsmittel (40) offen ist, die teilweise in die Kompressionskammer (32) hineinragen.

13. Vorrichtung nach Anspruch 12,
**dadurch gekennzeichnet, dass** eine zweite Fläche (39") der Platte (39) mit einer Kompressionsfeder (33) des Kompressionsmittels (30) fest verbunden ist, wobei die Kompressionsfeder (33) in einer ersten Richtung (D1), die mit der Rotationsachse (AX) zusammenfällt, und senkrecht zu einer zweiten Richtung (D2), in der mindestens eine Verschiebefeder (51) des Verschiebemittels (50) angeordnet ist, vorgesehen ist.

14. Vorrichtung nach einem der Ansprüche 10 bis 13,
**dadurch gekennzeichnet, dass** das Kompressionsmittel (30) eine Kompressionsfeder (31) aufweist, wobei die Kompressionsfeder (31) eine sekundäre Transmissionswelle (35) der Vorrichtung umgibt, wobei die sekundäre Transmissionswelle (35) die zweite Haupttransmissionswelle (3), die gekoppelt werden soll, verlängert.

15. Vorrichtung nach einem der vorstehenden Ansprüche,
**dadurch gekennzeichnet, dass** die Vorrichtung (10) eine sekundäre Transmissionswelle aufweist, wobei die sekundäre Transmissionswelle (35) sekundäre Längsriffelungen aufweist, um in Drehrichtung mit der zweiten Haupttransmissionswelle (3) verbunden zu sein.

16. Trimmaktuator (1) eines Luftfahrzeugs mit einer ersten und einer zweiten Haupttransmissionswelle (2, 3) sowie mit einem Motor (4), der eine der ersten und zweiten Haupttransmissionswellen (2, 3) in eine Drehbewegung versetzen kann,
**gekennzeichnet durch** eine Vorrichtung (10) zum Kuppeln der ersten und zweiten Haupttransmissionswellen (2, 3) nach einem der vorstehenden Ansprüche, wobei das Blockiermittel (20) mit der ersten Haupttransmissionswelle (2) fest verbunden ist und das Kompressionsmittel (30) mechanisch drehfest mit der Drehachse (AX) der zweiten Haupttransmissionswelle (3) verbunden ist.

17. Trimmaktuator nach Anspruch 16,
**gekennzeichnet durch** eine Grube (60), die mit einem Kurbelzapfen (61) und einem Pleuel (62) versehen ist, um die zweite Haupttransmissionswelle (3) mit einer Flugsteuerung zu verbinden, wobei der Kurbelzapfen (61) mit der zweiten Haupttransmissionswelle (3) und dem Pleuel (62) fest verbunden ist.

18. Trimmaktuator nach einem der Ansprüche 16 oder 17,
**dadurch gekennzeichnet, dass** das Kompressionsmittel (30) mit einer sekundären Transmissionswelle (35) versehen ist, die sekundäre Längsriffelungen aufweist, wobei die zweite Haupttransmissionswelle (3) primäre Längsriffelungen aufweist, die mit den sekundären Längsriffelungen zusammenwirken.

19. Trimmaktuator nach einem der Ansprüche 16 bis 18,
**dadurch gekennzeichnet, dass** er ein Mittel zur Feststellung (100, 100') in Translationsrichtung entlang der Rotationsachse (AX) der Vorrichtung zum Kuppeln der ersten und zweiten Haupttransmissionswellen (2, 3) aufweist.
